# EUROPEAN PATENT SPECIFICATION

(11) **EP 4 257 462 B1**
(45) Date of publication and mention of the grant of the patent: **11.11.2026**
(21) Application number: 23166201.6
(22) Date of filing: 31.03.2023
(51) Int. Cl.: B62D 53/08

(54) **FIFTH WHEEL WITH AN AUTOMATICALLY MOVING ADJUSTING MEMBER AND METHOD THEREOF**
SATTELKUPPLUNG MIT EINEM AUTOMATISCH BEWEGLICHEM VERSTELLELEMENT UND VERFAHREN HIERZU
SELETTE D'ATTELAGE AVEC ÉLÉLMENT DE RÉGLAGE À DÉPLACEMENT AUTOMATIQUE ET SON PROCÉDÉ

(30) Priority: 07.04.2022 TR 202205578
(43) Date of publication of application: 11.10.2023
(73) Proprietor: Sampa Otomotiv Sanayi Ve Ticaret Anonim Sirketi, 55300 Samsun (TR)
(72) Inventor: KOSEOGLU, Arda, Samsun (TR); SAHINKAYA, Erdem, Samsun (TR); CEP, Nurettin Husnu, Samsun (TR); ALBAYRAK, Ismail Utku, Samsun (TR); EKILI, Sercan, Samsun (TR); YOLCU, Kagan, Samsun (TR)
(74) Representative: Genç Ilhan, Oznur

(56) References cited:
- EP-B1- 0 544 268
- EP-B1- 1 396 417
- EP-B1- 2 090 500
- EP-B1- 2 189 307
- CN-A- 109 383 645
- CN-B- 108 216 398
- DE-C2- 2 843 455
- DE-U1- 9 105 614
- US-A- 2 431 779
- US-A- 3 056 612
- US-A- 3 251 610
- US-A- 4 106 793
- US-A- 5 876 055

## Description

This invention relates to increasing the service life of fifth wheel systems by means of having an adjusting element that can automatically provide adjustment without requiring the operator to manually adjust the tightness in the locked position, unlike fifth wheel systems in the prior art.

Heavy commercial tractor type vehicles are intensively used in the load transportation sector. Tractor type vehicles are heavily used in the transportation of various loads such as goods, containers, fuel, concrete, cement, soil, iron, and similar materials. By attaching a trailer to the back of heavy commercial tractor type vehicles, high capacity transportation is provided. Considering factors such as the size, capacity, and type of the load to be transported, different types of trailers are available. Drivers who operate the vehicle connect the appropriate trailer to the vehicle for the load they will carry. After the transportation of the load is completed, if necessary, a different trailer is connected to the vehicle for the load to be carried again. Therefore, the connection between the trailer and the vehicle is frequently disconnected and connected by vehicle drivers.

The fifth wheel system provides the connection between the trailer and the vehicle. In order to provide this connection, the kingpin, which is mounted under the trailer or the vehicle, is connected to the fifth wheel. When the kingpin passes through the fifth wheel, the movable parts on the fifth wheel move, thus locking the fifth wheel system. Since the locking process is triggered by the tensioned spring, the parts on the locking system are tightly locked with the force received from the spring. The tightly locked kingpin and other parts on the locking system cause wear and tear, which reduces the life of the fifth wheel. Therefore, after the locking process, the adjusting member on the fifth wheel must be manually rotated by the vehicle driver to allow the movement of the wedge, which adjusts the locking tightness of the kingpin. By adjusting the locking tightness of the kingpin to an appropriate value, the stresses on the locking system can be reduced, preventing wear and tear of the fifth wheel. It is known in the literature that the optimal locking tightness is achieved when the operator rotates the adjusting member 1.5 turns after it contacts the wedge. When adjustment is not performed, wear and tear is observed on the kingpin and the locking elements associated with the kingpin. Since these unwanted wears reduce the life of the fifth wheel, the vehicle driver must adjust the adjusting member manually each time the kingpin is connected to the fifth wheel. However, the operator usually neglects this process or fails to make the appropriate adjustment, which results in a shortened life of the fifth wheel.

In the prior art European patent document EP544268B1 relates to a locking mechanism for locking and unlocking the fifth wheel. The mechanism includes a sliding wedge attached to a lever, and during locking, the lever is compressed towards the jaw by the force from the spring. To unlock the mechanism, the force applied by the spring needs to be overcome. For this purpose, the lever is pulled, and after the lock is released, the lever is fixed in the notch area.

In the prior art German patent document DE9105614U1, mentions that the adjusting element wears out over time, causing the maximum displacement of the wedge to change. The adjusting element mentioned in the patent is manually controlled by the operator. Therefore, it is not possible to prevent errors due to human factors, and unwanted wear can occur on the fifth wheel, leading to a decrease in its lifespan.

The European patent document EP1396417B1, relates to the use of two sensors to indicate the locking state of the fifth wheel with the kingpin in the known art of technology. One of these sensors checks the kingpin by fitting into the gap where the kingpin enters, while the other sensor detects the magnetic field from the magnet on the arm. The sensors confirm each other, and the information about the fifth wheel and kingpin being locked is transmitted to the driver's cab.

In this document, using two sensors for locking reduces signal errors, but increases the cost of sensor usage. Additionally, when there is wear on the kingpin and locking elements on the fifth wheel, the locking tightness is manually adjusted by the operator for each connection.

In the EP2189307B1 European patent document, which is part of the known art, an electronic system is related to visualizing whether the trailer and the truck are locked or not. The system has a magnet for creating a magnetic field and a Hall-Sensor for measuring this magnetic field to detect the position of a trailer's kingpin relative to an throat of fifth wheel for connection.

In this document, the locking tightness that needs to be adjusted every time the fifth wheel is connected to the kingpin is manually adjusted by the operator. Due to being performed by the operator, human errors occur and the locking system tightness is not always set to the appropriate value, leading to a shortened life of the fifth wheel.

In the European patent document EP2090500B1 in the known state of the art, there is a sensor that detects the magnetic field emitted from the magnet on the lever when the fifth wheel is locked. With this sensor, it is ensured that the locked information is received by flashing the light system in the device mounted on the fifth wheel.

In this document, the device described has a short life due to the use of a battery-powered light system and sensors. In addition, the fifth wheel's lifes is shortened because the adjusting element that adjusts the locking tightness of the kingpin and locking system is manually adjusted by the operator.

US 5 876 055 A relates to mechanisms designed to eliminate the need for grease to lubricate the contact between a fifth wheel plate and a trailer riding plate, and features automatic adjustment to maintain tolerances between a trailer king pin and the locking jaw of a fifth wheel, thereby automatically adjusting for slack in the locking system. The fifth wheel of US 5 876 055 A has a sliding jaw and wedge locking mechanism that is generally urged into an open or closed position by an arcuate movement of lever arm and reduces the amount of force to be applied to the pull handle to urge the lever arm when the pull handle engages the lever arm towards an open position, and the force applied on the jaw and wedge by the king pin and translated to the lever arm is countered by the less force necessary to oppose the force created by the king pin due to the leverage available farther out on the lever arm due to coil spring. The fifth wheel further has an induction switch incorporated beneath the fifth wheel plate, positioned above where the distal end of lever arm rests when in the closed position.

The purpose of this invention is to increase the service life of the fifth wheel by minimizing the errors that may occur due to operator errors by enabling the automatic movement of the adjusting member, which adjusts the locking tightness by moving the wedge forward after the operator manually rotates the adjusting member in the existing fifth wheel systems.

To achieve the purpose of this invention, the fifth wheel, as described in the first claim and subsequent claims, used in the fifth wheel system of heavy commercial vehicles includes at least one lever that releases the kingpin from the locked position, at least one moving part connected to the lever, at least one sensor that detects the displacement of the moving part, at least one jaw that locks the kingpin, at least one wedge that adjusts the tightness of the jaw's lock, and at least one adjusting member that moves the wedge to adjust the locking tightness.

The adjusting element that can adjust the tightness of the locking can be elements such as screws, bolts or gears to provide adjustment.

The invention relates to a fifth wheel that has at least one actuator that enables the adjusting member to be actuated and an electronic circuit that allows the adjusting member to move automatically.

The adjusting member, which prevents premature wear on both the kingpin and the fifth wheel by adjusting the tightness of the locking by causing the wedge on the fifth wheel to move forward, must be manually adjusted by the operator every time the fifth wheel is locked. The operator performs this operation by turning the adjusting member 1.5 turns after it is pressed against the wedge to prevent early wear on the fifth wheel and kingpin. However, this operation is not always performed by the operator or, even if performed, the optimal locking tightness required for the operation of the fifth wheel and kingpin locking mechanism may not be achieved, resulting in premature wear on the fifth wheel and kingpin, and reduced service life. With at least one actuator that enables the adjusting member to be actuated and an electronic circuit that allows the adjusting member to move automatically, the adjusting member can be fully automatically controlled and moved. With the electronic system, the automatic movement of the adjusting member prevents errors that may occur due to user error, thus increasing the service life of the fifth wheel system.

In one embodiment of the invention, the fifth wheel detects that the adjusting member has contacted the wedge when the current value measured on the electronic board (PCB) suddenly increases. When the adjusting member contacts the wedge, a high current is read on the electronic circuit due to an increase in the power drawn by the actuator from the power source. Thus, the electronic board (PCB) can detect that the adjusting member has contacted the wedge and transmit the information on the duration of the movement to the motor. The motor adjusts the optimal locking tightness by moving the adjusting member toward the wedge, reducing the stress on the kingpin and fifth wheel locking system, based on the information received from the electronic circuit about the duration of the movement it needs to perform.

In one embodiment of the invention, the fifth wheel includes at least one gear that connects with the adjusting member of the driving part. This allows for the transfer of torque generated by the driving part to the adjusting member. Box is designed more compact by using multiple gears. Instead of gears, other motion transmission elements such as belt pulleys, chains, magnetic, hydraulic and pneumatic systems can be used.

In an application of the invention, the fifth wheel is contained within a box that also holds an electronic board (PCB), a motor, and gears. The assembly of the box to the fifth wheel is realized by using a connection element in the openings on the box. This connection element can be a screw, bolt or a chemical adhesive. This box allows for a compact design and protects the parts inside from foreign objects such as water, stones, gravel, and dust in variable weather and environmental conditions. The parts inside the box are isolated from the atmosphere to prevent damage when the vehicle is on dusty or gravelly roads. Additionally, to prevent any malfunctions due to contact with liquids during vehicle movement or washing, the box is made to be impermeable.

In an application of the invention, the adjusting member of the fifth wheel is a rack and pinion. This allows for automatic adjustment of the locking tightness by an electronic system or manual control by the operator by turning the gears located on the handle outside of the box to control the movement of the rack and pinion.

In one embodiment of the invention, the fifth wheel comprises at least one solenoid valve assembled to the gears. The solenoid valve passes through the holes in the gears and ensures that the adjusting member remains stationary during sudden movements of the vehicle. To move the adjusting member, the solenoid valve disassambles from the gears before the motor starts, allowing it to move. When the adjustment is completed, it is connected to the gears again and prevents unwanted movement of the gears due to vibration from the road and related sources.

In one embodiment of the invention, the fifth wheel comprises at least one sensor that detects the movement of the moving part, with or without contact with the transmitter. These sensors can be distance sensors, switching elements, gyroscopes, infrared sensors, or sensors that can detect the magnetic field emitted by transmitters such as magnets or metal plates.

By using an infrared sensor or distance sensor on any moving and/or non-moving part on the fifth wheel, such as a lever, moving part, wedge, spring, etc., it is possible to detect whether the fifth wheel is in a locked or unlocked position.

When moving parts such as a lever or moving part on the fifth wheel come into contact with the switching element, information can be obtained by PCB that it has been locked.

The movement of the moving part can be detected by placing a gyroscope on the moving parts. The gyroscope can measure on the X, Y, and Z axes.

In one embodiment of the invention, the fifth wheel includes at least one indicator located on the sensor or anywhere visible to the user. The indicators transmit information to the operator about whether the fifth wheel is locked and the operating status of the electronic board (PCB). When two different indicators are used, one shows the locking status and the other shows the electronic board's operating status. If only one indicator is used, the locking status of the fifth wheel and the operating status of the electronic board are conveyed to the user through indicators that can display different colored lights. The indicator can be a light or a device such as sound, bluetooth module, wireless or infrared devices that enable information to be transmitted to the user.

A method of automatic operation of an adjusting member on the fifth wheel system according to the invention;
a) The sensor detects the movement of any moving part on the fifth wheel, either by contacting or not contacting, and transmits information to the electronic board (PCB) about whether the fifth wheel is locked. After the electronic board (PCB) receives information that the fifth wheel is locked, it sends a command to the actuator to move the adjusting member forward.
b) After the actuator is activated, the adjusting member moves towards the wedge to adjust the locking tightness. The wedge, because of its conical face that comes into contact with the jaw, shifts the jaw axially when pushed towards it. This adjusts the locking tightness of the kingpin and the fifth wheel locking mechanism.
c) After the adjusting member contacts the wedge due to the torque transmitted from the actuator, the actuator increases the current it draws because of the reactive force applied by the wedge to the adjusting member. The change in the measured current value on the electronic board (PCB) indicates that the adjusting member is in contact with the wedge.
d) After it is detected that the adjusting member is in contact with the wedge, the electronic board (PCB) sends a command to the actuator to move the adjusting member towards the wedge for a predefined period. Thus, the locking tightness is optimized to prevent premature wear of the fifth wheel system.

The implementation of the methods in steps a, b, c, and d in sequence ensures the advantages mentioned in the fifth wheel invention.

In one embodiment of the invention, in the automatic operation method of the adjusting member on the fifth wheel system, after the electronic board (PCB) reads the information that the fifth wheel is unlocked state from the sensor, the electronic board (PCB) sends a command to the actuator to move for a predetermined time. Thus, the adjusting member moves in the opposite direction of the wedge and stops after the predefined time.

The subject of the invention is a fifth wheel system that includes an adjusting member that adjusts the appropriate locking tightness by automatically moving, and by being digitized, prevents operator errors and early wear, and increases the service life of the fifth wheel and it improves operating method.

The fifth wheel for achieving the object of the present invention is shown in the accompanying figures, and from these figures:
Figure 1 - Bottom view of the fifth wheel in the prior art.
Figure 2 - Bottom view of the fifth wheel subject of the invention in the locked state.
Figure 3 - Detailed view of the locking mechanism of the fifth wheel of the invention in the locked state.
Figure 4 - The invention is a bottom view of the fifth wheel in the unlocked state.
Figure 5 - The subject of the invention is a perspective view of the structure on the fifth wheel.
Figure 6 - Bottom view of another embodiment of the adjusting member of the inventive fifth wheel.
Figure 7 - Detailed view of another embodiment of the fifth wheel adjusting member according to the invention.
Figure 8 - Diagrammatic representation of the automatic operating method of the fifth wheel adjusting member according to the invention.

The parts in the figures are numbered one by one and the corresponding numbers are given below.
- 1: Fifth wheel
- 2: Lever
- 3: Moving part
- 4: Sensor
- 5: Jaw
- 6: Wedge
- 7: Adjusting member
- 7': Rack and pinion
- 8: Spring
- 9: Electronic circuit
- 10: Actuator
- 11: Gear
- 12: Structure
- 13: Solenoid valve
- 14: Handle
- 15: Opening
- K: Kingpin
- D: Hole
- V: Transmitter

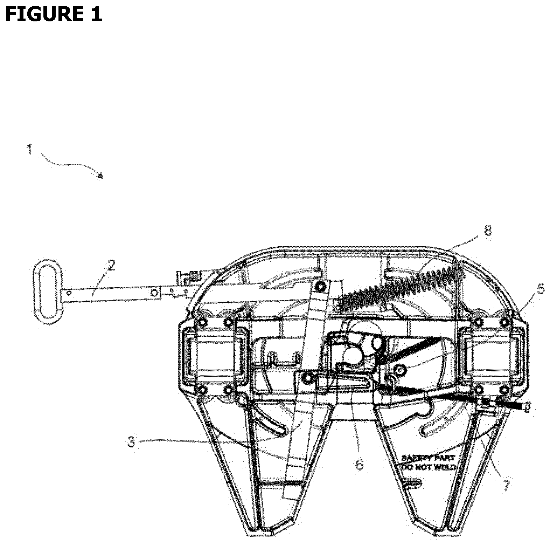

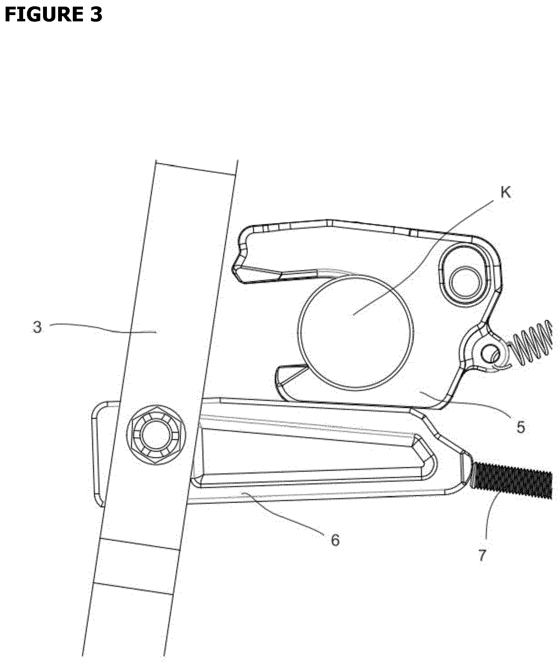

The fifth wheel (1) comprises at least one lever (2) that removes the kingpin (K) from a locked position, at least one moving part (3) connected to the lever (2), at least one sensor (4) that detects the movement of the part (3), at least one jaw (5) for locking the kingpin (K), at least one wedge (6) that adjusts the tightness of the jaw (5), and at least one adjusting member (7) that adjusts the tightness of the lock by moving the wedge (6), at least one actuator (10) for actuating the adjusting member (7) and an electronic circuit (9) for automatically moving the adjusting member (7) (Fig. 1-5).

The adjusting member (7) on the fifth wheel (1), which can adjust the tightness of the locking, can be a bolt or screw.

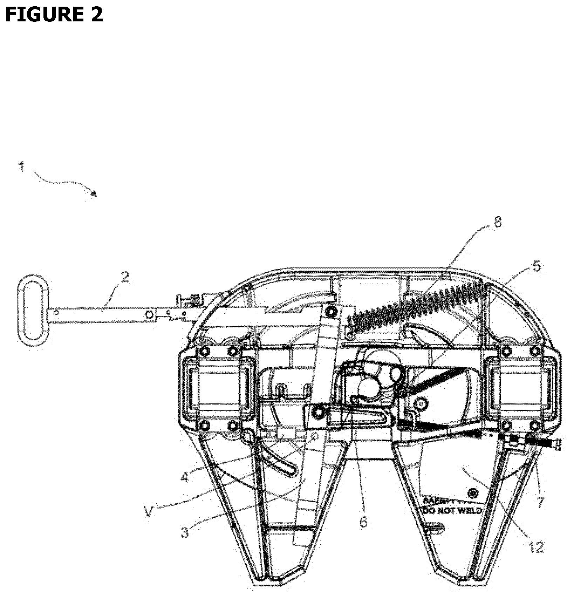

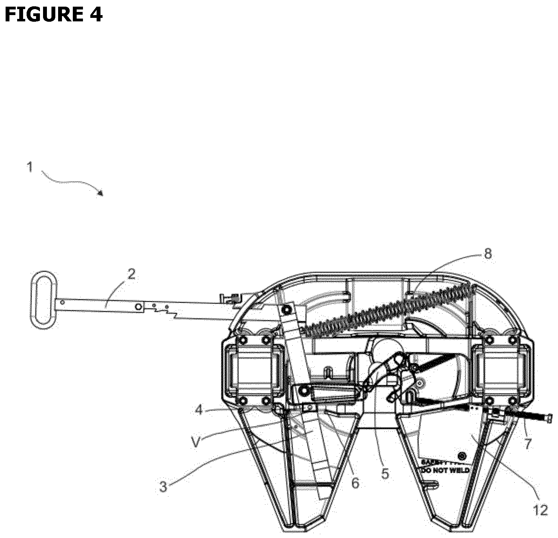

The sensor (4) can be a magnetic field sensor to detect the magnetic field emitted from a transmitter (V) such as a magnet. Thus, the displacement of the moving part (3) is detected, indicating whether the fifth wheel (1) is locked or unlocked position (Fig. 2 and Fig. 4).

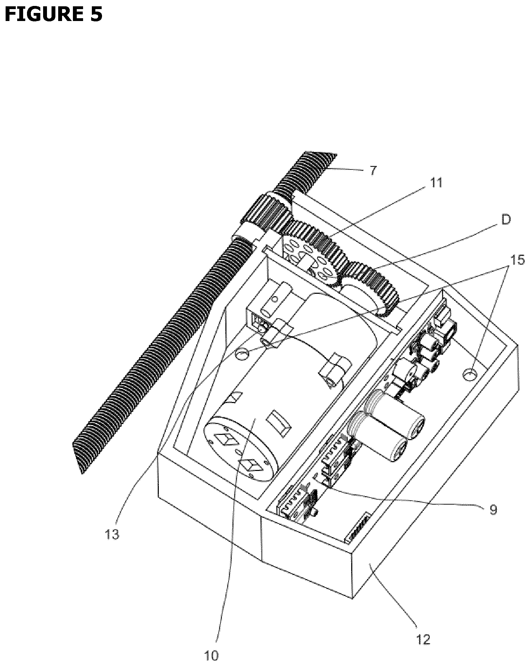

The electronic circuit (9) that enables the automatic movement of the adjusting member (7) on the fifth wheel (1) also includes a processor, motor driver, bluetooth module, display device, current control sensor, voltage sensor, and temperature sensor for measuring the internal temperature (Fig. 5).

The fifth wheel (1), which remains in an open position through the stress of the spring (8) attached to the moving part (3) that moves with the pull of the lever (2), starts to operate its locking mechanism when the jaw (5) on it comes into contact with the kingpin (K). With the force created by the triggering of the spring (8) after the kingpin (K) contacts the jaw (5), the jaw (5) and wedge (6) move towards each other, and the fifth wheel (1) locks with the kingpin (K). The conical surface of the wedge's (6) side facing the jaw (5) allows for adjustment of the tightness of the jaw (5). Once locked, the sensor (4) that detects the movement of the moving part (3) sends a signal to the electronic circuit (9) indicating that it has been locked, and the electronic circuit (9) sends a command to the actuator (10) to start moving. This causes the adjusting member (7) to automatically move towards the wedge (6). As a result, the tightness of the kingpin (K) and the lock can be automatically adjusted without the need for manual control of the adjusting member (7), minimizing operator errors and extending the life of the fifth wheel (1) (Fig. 2-5)

In one embodiment of the invention, the fifth wheel (1) detects when the adjusting member (7) comes into contact with the wedge (6) by measuring the change in current on the electronic circuit (9). When the adjusting member (7) comes into contact with the wedge (6), the actuator (10) draws more current from the power source than the electronic circuit (9) measures, allowing the electronic circuit (9) to detect when the adjusting member (7) has made contact with the wedge (6) and to transmit information about the duration of the movement needed to the actuator (10). The actuator (10) uses the pre-defined time information received from the electronic circuit (9) to push the adjusting member (7) towards the wedge (6) to achieve the optimal tightness required for locking. This ensures that the kingpin (K) can turn with minimal torque inside the jaw (5) as shown in Fig. 2, Fig. 3 and Fig. 5.

In one embodiment of the invention, the fifth wheel (1) includes at least one gear (11) that enables the torque generated by the actuator (10) to be transferred to the adjusting member (7). A compact design is achieved by using two gears (11) for movement transfer, reducing the area of the fifth wheel (1) that the gears (11) will occupy (Fig. 5).

In one embodiment of the invention, the fifth wheel (1), electronic circuit (9), actuator (10), and gears (11) are all placed in a structure (12). The structure (12) is mounted on the fifth wheel (1) by passing a connection element through openings (15) on the structure (12). This structure (12) enables the creation of a compact design and allows the components (9, 10, 11) inside it to be placed in a way that isolates them from the effects of different environmental conditions. As a result, the structure (12) is also resistant to water, stones, gravel, dust, and extreme temperatures (Fig. 2 and Fig. 5).

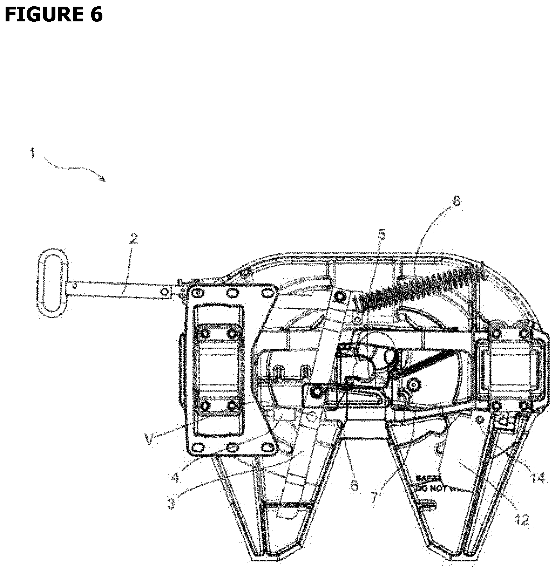

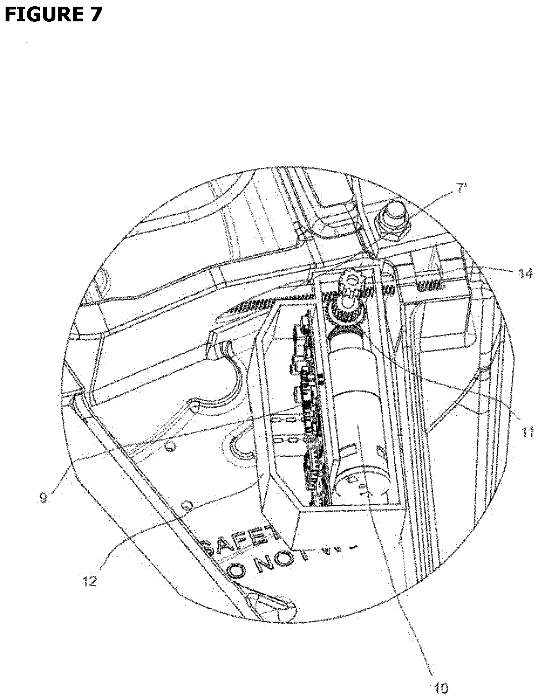

In one embodiment of the invention, the adjusting element (7) of the fifth wheel (1) is formed as a rack and pinion (7'). In this way, when a failure occurs in the automatic operation of the rack and pinion (7'), the operator can move the rack and pinion (7') by manually controlling the gears (11) from the handle (14) located outside the structure (12). In this application, after the rack and pinion (7') contacts the wedge (6), the gears (11) are rotated 1.5 turns by a command sent from the electronic circuit (9) to the actuator (10) to adjust the tightness of the lock system(Fig. 6 and Fig. 7).

In one embodiment of the invention, at least one solenoid valve (13) is assembled to the gears (11) which are related to the actuator (10) of the fifth wheel (1). Thus, sudden movements of the adjusting member (7) are prevented. The solenoid valve (13) can pass through the holes (D) formed in the gears (11). Before the actuator (10) starts to move, the solenoid valve (13) moves back its extension. Thus, the gears (11) are disengaged and ready to rotate. When the actuator (10) completes its movement, it passes through the holes (D) again and prevents unwanted movements of the gears (11) due to vibrations and related effects caused by the road (Fig. 5).

In one embodiment of the invention, the fifth wheel (1) system contains at least one, preferably two indicators located on the sensor (4). When there are two indicators, one shows the on/off status of the electronic circuit (9) and the other shows whether the fifth wheel (1) is locked or unlocked. When one indicator is used, indicators that can show the locking status or the on/off status in different colored lights are preferred (Fig. 2 and Fig. 5).

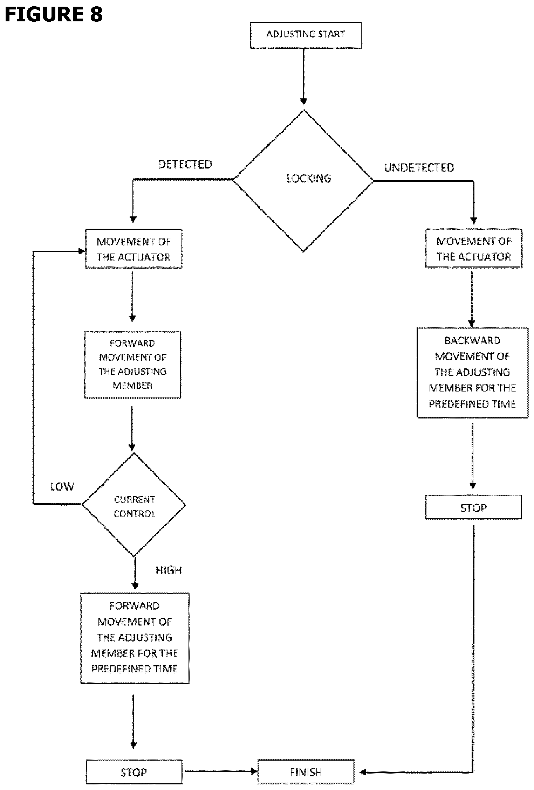

The automatic operation method of the adjusting member (7) on the fifth wheel (1) system;
a) By sensing the magnetic field emitted from the magnet on the moving part (3), the sensor (4) detects the movement of the moving part (3) and transmits the information that the fifth wheel (1) is locked to the electronic circuit (9). After receiving the information that the fifth wheel (1) is locked, the electronic circuit (9) sends the move command to the actuator (10) to advance the adjusting member (7) (Fig. 2, Fig. 5 and Fig. 8).
b) With the movement of the actuator (10), the adjusting member (7) moves towards the wedge (6) to adjust the tightness of the lock. Here, the conical wedge (6) moves towards the jaw (5) to adjust the tightness of the lock (Fig. 2, Fig. 5, and Fig. 8).
c) After the adjusting member (7) contacts the wedge (6) with the movement transmitted from the actuator (10), the actuator (10) draws high current since it must overcome the spring force from the wedge (6) in order to continue the movement. The current value measured on the electronic circuit (9) changes due to the high current drawn, which is detected as the adjusting member (7) making contact with the wedge (6) (Fig. 2, Fig. 5 and Fig. 8).
d) After the electronic circuit (9) detects that the adjusting member (7) has made contact with the wedge (6), it sends a command to the actuator (10) to move the adjusting member (7) towards the wedge (6) for a pre-defined time. This prevents premature wear on the fifth wheel (1) and ensures that the locking tightness is set to the optimal value (Fig. 2, Fig. 5, and Fig. 8).

In one embodiment of the invention where automatic operation of the adjusting member (7) on the fifth wheel (1) operates automatically, after the sensor (4) sends information about the opening of the fifth wheel (1) to the electronic circuit (9), the electronic circuit (9) sends a command to the actuator (10) to move the adjusting member (7) backwards for the pre-defined time. Thus, the adjusting member (7) starts to move in the opposite direction to the wedge (6) and moves back and stops for the time predefined in the electronic circuit (9) (Fig. 4, Fig. 5, and Fig. 8).

This invention enables the adjusting member (7) on the fifth wheel (1) to move automatically to adjust the locking tightness to the most suitable value for allowing the kingpin (K) to move with minimum torque after locking. As a result, a fifth wheel (1) and the working method of the adjusting member (7) on the fifth wheel (1) are obtained that prevent human errors that may occur when manually controlled and reduce the service life.

## Claims

1. A fifth wheel (1) for a heavy duty truck comprising at least one lever (2) which removes the kingpin (K) from the locked position; at least one moving part (3) connected to the lever (2); at least one sensor (4) that detects the displacement of the moving part (3); at least one jaw (5) that enables the kingpin (K) to be locked; at least one wedge (6) for adjusting the locking tightness of the jaw (5) and at least one adjusting member (7) for adjusting the locking tightness by moving the wedge (6), **characterized by** at least one actuator (10) for driving the adjusting member (7), and an electronic circuit (9) for automatically moving the adjusting member (7).

2. A fifth wheel (1) as in Claim 1, **characterized by** detecting whether the adjusting member (7) contacts the wedge (6) by the change in the measured current on the electronic circuit (9).

3. A fifth wheel (1) as in Claim 1, **characterized by** comprising at least one gear (11) for transferring the movement of the actuator (10) to the adjusting member (7).

4. A fifth wheel (1) as in Claim 1, **characterized by** a structure (12) that includes the electronic circuit (9), the actuator (10) and the gears (11) together.

5. A fifth wheel (1) as in Claim 1, **characterized by** the adjusting member (7) being a rack and pinion (7').

6. A fifth wheel (1) as in Claim 1, **characterized by** including at least one solenoid valve (13) connected to the gears (11).

7. A method for the automatic operation of an adjusting member (7) on a fifth wheel system on heavy duty vehicles, **comprising;**
a) Fifth wheel locked state data received from a sensor (4) which detects the-movement of a moving part (3) is transmitted to an electronic circuit (9) and the electronic circuit (9) sends an actuator (10) a command to move,
b) With the movement of the actuator (10), the adjusting member (7) starts to move towards a wedge (6) to adjust the locking tightness,
c) Detection of contact of the adjusting member (7) to the wedge (6) by changing of measured current on the electronic circuit (9),
d) The electronic circuit (9), after detecting that the adjusting member (7) is in contact with the wedge (6), sends a command to the actuator (10) to move the adjusting member (7) for a predefined period of time in order to adjust the locking tightness.

8. A method as in Claim 7, **characterized by** backward movement of the adjusting member (7) with the unlocked state information received from the sensor (4).

## Patentansprüche

1. Eine Sattelkupplung (1) für einen Schwerlastkraftwagen, umfassend mindestens einen Hebel (2), der den Zugsattelzapfen (K) aus der verriegelten Position löst; mindestens ein bewegliches Teil (3), das mit dem Hebel (2) verbunden ist; mindestens einen Sensor (4), der die Verschiebung des beweglichen Teils (3) erfasst; mindestens eine Klaue (5), die das Verriegeln des Zugsattelzapfens (K) ermöglicht; mindestens einen Keil (6) zum Einstellen der Verriegelungsfestigkeit der Klaue (5) und mindestens ein Einstellelement (7) zum Einstellen der Verriegelungsfestigkeit durch Bewegen des Keils (6), **dadurch gekennzeichnet, dass** sie mindestens einen Aktor (10) zum Antreiben des Einstellelements (7) und eine elektronische Schaltung (9) zum automatischen Bewegen des Einstellelements (7) umfasst.

2. Eine Sattelkupplung (1) nach Anspruch 1, **dadurch gekennzeichnet, dass** das Berühren des Keils (6) durch das Einstellelement (7) durch die Änderung des an der elektronischen Schaltung (9) gemessenen Stroms erfasst wird.

3. Eine Sattelkupplung (1) nach Anspruch 1, **dadurch gekennzeichnet, dass** sie mindestens ein Zahnrad (11) zur Übertragung der Bewegung des Aktors (10) auf das Einstellelement (7) umfasst.

4. Eine Sattelkupplung (1) nach Anspruch 1, **dadurch gekennzeichnet, dass** sie eine Struktur (12) umfasst, die die elektronische Schaltung (9), den Aktor (10) und die Zahnräder (11) zusammen aufnimmt.

5. Eine Sattelkupplung (1) nach Anspruch 1, **dadurch gekennzeichnet, dass** das Einstellelement (7) eine Zahnstange mit Ritzel (7') ist.

6. Eine Sattelkupplung (1) nach Anspruch 1, **dadurch gekennzeichnet, dass** sie mindestens ein Magnetventil (13) umfasst, das mit den Zahnrädern (11) verbunden ist.

7. Ein Verfahren zum automatischen Betreiben eines Einstellelements (7) an einem Sattelkupplungssystem von Schwerlastfahrzeugen, **umfassend**:
a) Daten zum verriegelten Zustand der Sattelkupplung, die von einem Sensor (4) empfangen werden, der die Bewegung eines beweglichen Teils (3) erfasst, werden an eine elektronische Schaltung (9) übertragen, und die elektronische Schaltung (9) sendet einen Bewegungsbefehl an einen Aktor (10),
b) mit der Bewegung des Aktors (10) beginnt sich das Einstellelement (7) in Richtung eines Keils (6) zu bewegen, um die Verriegelungsfestigkeit einzustellen,
c) Erfassen des Kontakts des Einstellelements (7) mit dem Keil (6) durch Änderung des an der elektronischen Schaltung (9) gemessenen Stroms,
d) die elektronische Schaltung (9) sendet nach dem Erfassen, dass das Einstellelement (7) in Kontakt mit dem Keil (6) steht, einen Befehl an den Aktor (10), um das Einstellelement (7) für eine vordefinierte Zeitspanne zu bewegen, um die Verriegelungsfestigkeit einzustellen.

8. Ein Verfahren nach Anspruch 7, **dadurch gekennzeichnet, dass** eine Rückwärtsbewegung des Einstellelements (7) mit der vom Sensor (4) empfangenen Information über den entriegelten Zustand erfolgt.

## Revendications

1. Sellette d'attelage (1) pour un camion poids lourd comprenant au moins un levier (2) qui retire le pivot d'attelage (K) de la position verrouillée ; au moins une pièce mobile (3) reliée au levier (2) ; au moins un capteur (4) qui détecte le déplacement de la pièce mobile (3) ; au moins une mâchoire (5) permettant le verrouillage du pivot d'attelage (K) ; au moins un coin (6) pour régler le serrage de verrouillage de la mâchoire (5) et au moins un organe de réglage (7) pour régler le serrage de verrouillage en déplaçant le coin (6), **caractérisée par** au moins un actionneur (10) pour entraîner l'organe de réglage (7), et un circuit électronique (9) pour déplacer automatiquement l'organe de réglage (7).

2. Sellette d'attelage (1) selon la revendication 1, **caractérisée par** la détection du fait que l'organe de réglage (7) entre en contact avec le coin (6) au moyen de la variation du courant mesuré sur le circuit électronique (9).

3. Sellette d'attelage (1) selon la revendication 1, **caractérisée en ce qu'**elle comprend au moins un engrenage (11) pour transférer le mouvement de l'actionneur (10) à l'organe de réglage (7).

4. Sellette d'attelage (1) selon la revendication 1, **caractérisée par** une structure (12) qui regroupe le circuit électronique (9), l'actionneur (10) et les engrenages (11).

5. Sellette d'attelage (1) selon la revendication 1, **caractérisée en ce que** l'organe de réglage (7) est un système à pignon et crémaillère (7').

6. Sellette d'attelage (1) selon la revendication 1, **caractérisée en ce qu'**elle comprend au moins une électrovanne (13) reliée aux engrenages (11).

7. Procédé pour le fonctionnement automatique d'un organe de réglage (7) sur un système de sellette d'attelage pour véhicules poids lourds, **comprenant** :
a) les données relatives à l'état verrouillé de la sellette d'attelage, reçues depuis un capteur (4) qui détecte le déplacement d'une pièce mobile (3), sont transmises à un circuit électronique (9), et le circuit électronique (9) envoie à un actionneur (10) une commande de déplacement,
b) sous l'action de l'actionneur (10), l'organe de réglage (7) commence à se déplacer vers un coin (6) afin de régler le serrage de verrouillage,
c) la détection du contact de l'organe de réglage (7) avec le coin (6) par la variation du courant mesuré sur le circuit électronique (9),
d) l'envoi par le circuit électronique (9), après avoir détecté que l'organe de réglage (7) est en contact avec le coin (6), d'une commande à l'actionneur (10) pour déplacer l'organe de réglage (7) pendant une durée prédéfinie afin de régler le serrage de verrouillage.

8. Procédé selon la revendication 7, **caractérisé par** un déplacement vers l'arrière de l'organe de réglage (7) en fonction de l'information d'état déverrouillé reçue depuis le capteur (4).
